# EUROPEAN PATENT SPECIFICATION

(11) **EP 2 773 887 B1**
(45) Date of publication and mention of the grant of the patent: **21.02.2018**
(21) Application number: 12846462.5
(22) Date of filing: 05.11.2012
(51) Int. Cl.: F16H 55/30, B66D 1/72

(54) **METHOD AND APPARATUS FOR MANIPULATING CHAIN SEGMENTS**
VERFAHREN UND VORRICHTUNG ZUR MANIPULATION VON KETTENGLIEDERN
PROCÉDÉ ET APPAREIL PERMETTANT DE MANIPULER DES SEGMENTS DE CHAÎNE

(30) Priority: 03.11.2011 US 201161555350 P
(43) Date of publication of application: 10.09.2014
(73) Proprietor: Bardex Corporation, Goleta, CA 93117 (US)
(72) Inventor: MILLER, Thomas, Goleta, CA 93117 (CA); GILPIN, James, Goleta, CA 93117 (CA)
(74) Representative: Hoffmann Eitle
(86) International application number: PCT/US2012/063610
(87) International publication number: WO 2013/067534

(56) References cited:
- US-A- 5 238 227
- US-A- 5 238 227
- US-A- 5 275 379
- US-A- 5 275 379
- US-A- 5 984 586
- US-A- 5 984 586

## Description

### BACKGROUND OF THE INVENTION

Offshore structures, such as floating production, drilling or construction platforms or spar buoys generally are moored in a desired location through the use of chains or cables secured between the platform and anchors on the ocean floor. Typically, the practice for mooring floating platforms includes extending a chain from the ocean anchor, through a fairlead device secured to the bottom of a platform column, to chain hauling equipment and chain stopper on the deck of the platform.

Mooring platforms in place over a drilling location often require the implementation of many chains, fairlead devices, anchors and chain equipment because of the massive size of the platforms. For example, the deck area of a platform is typically large enough to hold one or more buildings for housing workers and machinery, a number of cranes, and a drilling tower or limited production facilities.

Also, floatation of platforms is typically provided by a pair of large submerged pontoons. In such structures, columns are utilized, some as large as 32 feet in diameter, to support the deck on the pontoons. As a consequence of the platform's massive structure, several fairlead devices are often secured to each column of the platform and mooring chains are run through each of the fairlead devices from the anchors to chain hauling equipment on the deck.

Installation of floating production vessels offshore requires a method to haul in and guide pre-laid mooring chains into the chain fairlead and stopper mounted on the production vessel. The current practice is to feed (pay out) either a messenger chain or messenger wire rope from the production vessel through the on-vessel mooring equipment, and out to an anchor handling boat to connect the messenger line to the pre-laid permanent platform chain. The messenger line and associated mooring chain are then drawn into the production vessel. US 5 275 379 A discloses a wildcat chain hoist having pockets extending from a drum hub up to a perimeter, the pockets increasing in size toward the perimeter for handling chain with different link sizes.

### SUMMARY

The present invention relates generally to a method and/or apparatus for hauling in, paying out, guiding, storing, transferring, stabilizing and/or manipulating chains, cables, or ropes. A first aspect of the present invention provides a chain wheel as recited in claim 1 below.
A second aspect of the present invention provides a chain wheel as recited in claim 7 below.
A third aspect of the present invention provides a method of manipulating a chain as recited in claim 10 below.
Dependent claims provide particular embodiments and implementations of the present invention.
In one application, the method and apparatus are used to apply rotational power or braking and/or to guide chain lines made out of different chain sizes.

### BRIEF DESCRIPTION OF THE DRAWINGS

FIG 1 is a front view of a dual pocket chain wheel according to the invention;
FIG 2 is a side view of the dual pocket chain wheel in FIG 1;
FIG 3 is a side partial sectional view of an alternative embodiment of a dual pocket chain wheel according to the invention with a groove designed to carry the smaller chain in a "+" (plus) orientation;
FIG 4 is a front sectional view of a dual pocket chain wheel in FIG 3 with a groove designed to carry a smaller chain in a "+" orientation;
FIG 5 is a side partial sectional view of another alternative embodiment of a dual pocket chain wheel according to the invention with a groove designed to carry the smaller chain in an "x" orientation; and
FIG 6 is a front sectional view of a dual pocket chain wheel with a groove designed to carry the smaller chain in an "x" orientation.
FIG 7 is a side partial sectional view of another alternative embodiment of a dual pocket chain wheel according to the invention with a groove designed to carry the larger chain and flats to carry the smaller chain.

### DETAILED DESCRIPTION OF THE INVENTION

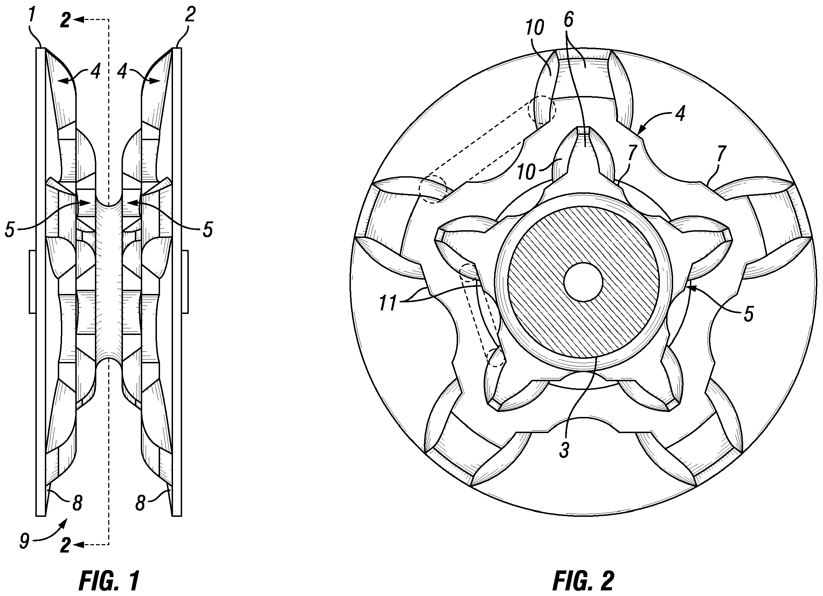

FIGS 1-7 are provided as illustrations of a method and apparatus for hauling in, paying out and/ or guiding chain during mooring operations. Multiple aspects of the invention are embodied in the method and apparatus illustrated therein. However, it should be noted that the detailed description of this preferred system and method which follows is provided to facilitate description of the inventive method and apparatus. It will be apparent to one skilled in the art, upon reading the detailed description provided and viewing the accompanying drawings, that the invention or certain aspects of the invention is also adapted for use in or with other environments, with respect to various other chain, cable, or rope uses, and by various uses other than mooring operations. Accordingly, the present invention is not intended to be limited to the methods, processes, and structures specifically described and illustrated herein. The method and apparatus can be used with any number of operations where guiding and controlling chain and cable of varying lengths and sizes are required. For purposes of description only, chains will be referred to as mooring chains. As noted, however, this is not intended to limit the disclosed invention to such uses.

Referring to the FIGS 1 and 2, there is shown a dual chain wheel capable of guiding, applying rotational power, or braking to two different chain sizes. The dual pocket chain wheel shown in FIGS 1 and 2 comprises two drums (1) and (2) attached about a drum hub (3) in spaced parallel relation. Aligned along the inside face of both drums are large wildcat profiles (4). Wildcat profiles are defined by the shaped portion of the dual chain wheel that is designed to orient and seat the mooring chains. The dual pocket chain wheel shown in FIGS 1 and 2 has two wildcat profiles for the two sizes of chain. A small wildcat profile (5) is used to guide, haul in, and/or pay out the smaller chain size. The large wildcat profile (4) is used to guide, haul in, and/or pay out the larger chain size. The large and small wildcat profiles are in shown aligned with each other but they may be in any alignment or in an adjustable relationship with each other. In addition, the wildcats may be adapted to be removable from the chain wheel drum such that different size wildcats may be used depending on the chain size.

The large and small wildcat profiles (4) and (5) include whelps (6) and pockets (7). The Whelps (6), shown in front view in FIG 1, extend from the interior drum face (8) to an interior position (9). The whelps (6) are spaced evenly around the circumference of the drums (1) and (2). The number of whelps (6) can vary depending on the desired use and chain size.

Between each whelp (6) are chain pockets (7). The chain pockets (7) are shaped and spaced to seat alternating chain sections as the mooring chains are drawn in or payed out. A section of large chain and small chain are shown in FIG 2 seated in chain pockets (7). Alternating chain sections (not shown) would be standing on edge and would not be seated in the chain pockets.

The chain pockets (7) are shaped and sized such that when the chain sections are seated in the pockets they are in contact with whelp flats (10) and pocket flats (11). The pocket flats (11) help distribute the load from the chain across seated chain links. In this manner, the pocket flats (11) prevent the chain load from being concentrated at the center of each chain link as it passes over the chain wheel. The pocket flats (11) in conjunction with the whelp flats (10) may also be used to transmit rotational power and braking to chain sections.

FIGS 1 and 2 depict a dual pocket chain wheel configuration capable of guiding, transmitting rotational power, and braking to two different chain sizes. Opposing whelps are shaped and spaced to guide alternating sections of the larger sized mooring chain vertically into the interior channel of the chain wheel. For the smaller chain size, the opposing whelps from the large wildcat profiles (4) guide the smaller chain into the small wildcat profile. Opposing whelps on the small wildcat profile (5) then guide alternating chain links in the same manner as described above. Guidance, rotational power, and braking can be applied to the smaller chain size through the pockets (7) and whelp flats (10) in a similar manner to that described above. Although FIGS 1 and 2 only show two wildcat profiles, any number may be used depending on the number of different chain sizes encountered.

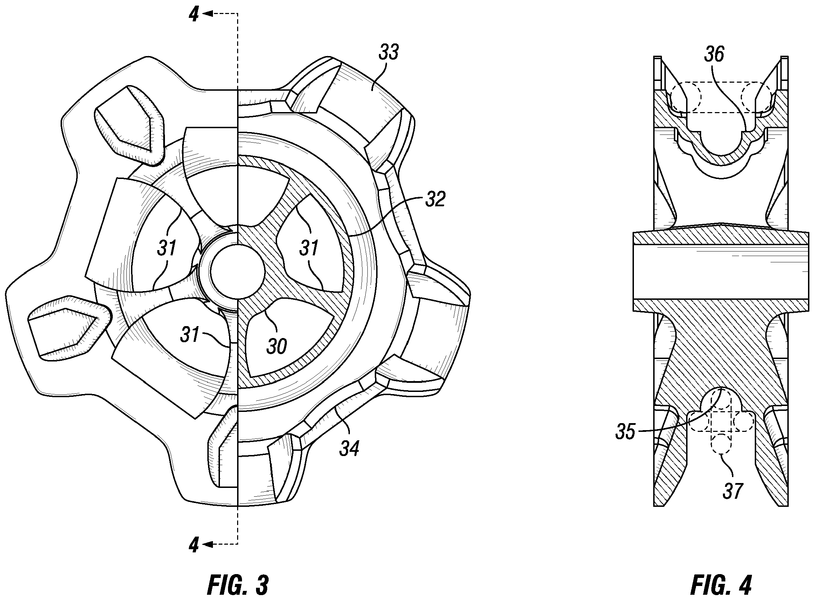

FIG 3 is a side partial cutaway of a dual pocket chain wheel with a groove designed to carry the smaller chain in a "+" orientation. The dual pocket chain wheel is shown in a hub and spoke configuration. The hub (30) defines the centerline hole. Spokes (31) space the rim (32) a distance away from center line.

The dual chain wheel shown in FIGS 3 and 4 has a wildcat profile defined by a number of whelps (33) equally spaced around a rim (32). Pockets (34) are located between the whelps (33). The whelps (33) orient the large chain links in the same manner described in FIGS 1 and 2. Guidance, rotational power and braking is also applied to the chain links in the large chain through the pocket flats and whelp flats as previously described.

Opposing whelps (33) are spaced to guide the small chain into the inner channel (35). The inner channel has a ledge (36) that supports and orients the small chain along the inner groove in a "+" orientation (37).

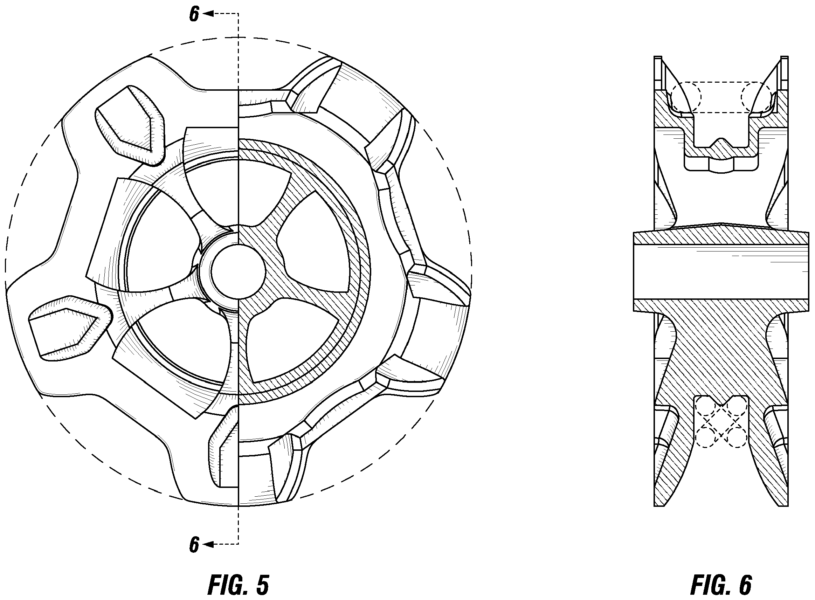

FIGS 5 and 6 show a different embodiment of the dual chain wheel configuration shown in FIGS 3 and 4. In the chain wheel shown in FIGS 5 and 6 the inner groove is in the shape of a "W" to guide the small chain in an x configuration.

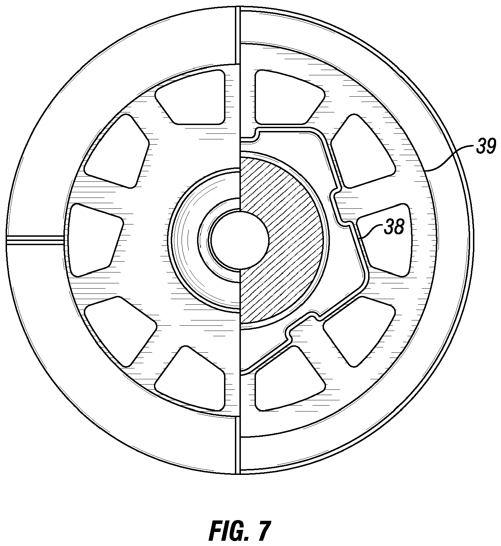

FIG 7 show a different embodiment of the dual chain wheel in which an outer groove (39) supports the large sized chain and flats (38) support the smaller chain size. As described above, the flats (38) support and distribute the load on the chain across the flat portion that is in contact with the chain link.

The inventive method and apparatus described above is well adapted for use with chain mooring systems, and thus the description focuses on this application of the invention. However, it shall be noted that the foregoing description is presented for purposes of illustration and description, and is not intended to limit the invention to the form disclosed herein. Consequently, variations and modifications to the method and apparatus commensurate with the above teachings and teaching of the relevant art are within the scope of the invention. For example, as mentioned previously, several aspects of the invention may be adapted for use in various tasks involving chain, cable, rope, or the like that involve gripping, guiding, or controlling chain, cable, rope, or the like.

Moreover, the embodiments described are further intended to explain the best modes for practicing the invention, and to enable others skilled in the art to utilize the invention in such, or other, embodiments and with various modifications required by the particular applications or uses of the present invention. It is intended that the appending claims be construed to include alternative embodiments to the extent that it is permitted by the prior art.

## Claims

1. A chain wheel comprising;
a wheel hub (3, 30);
a first outer wildcat profile (4) positioned about the hub;
a second outer wildcat profile (4) positioned about the hub in spaced parallel relation with the first outer wildcat profile;
a first inner wildcat profile (5) positioned about the hub and generally adjacent and closer to the wheel hub than the first outer wildcat profile; and
a second inner wildcat profile (5) positioned about the hub in spaced parallel relation with the first inner wildcat profile and generally adjacent the second outer wildcat profile,
wherein said first inner wildcat profile and said second inner wildcat profile are each configured to engage a chain segment.

2. The chain wheel of claim 1, wherein the pair of outer wildcat profiles is adapted to engage a first chain segment size and the pair of inner wildcat profiles is adapted to engage a second chain segment size.

3. A chain wheel as in claim 1, wherein each of the inner and outer wildcat profiles has a plurality of whelps (6, 33), and wherein pairs of spaced-apart whelps are adapted to position chain segments between pairs of wildcat profiles.

4. A chain wheel as in claim 3, wherein the whelps of the first and second inner wildcat profiles are aligned with respective whelps of the first and second outer wildcat profiles.

5. A chain wheel as in claim 1, wherein each of the inner wildcat profiles is rotatably adjustable about the hub relative to an outer wildcat profile.

6. A chain wheel as in claims 1 or 5, further comprising radiused pockets (7, 34) formed between adjacent whelps for accommodating horizontally disposed links.

7. A chain wheel comprising:
a rim (32);
a first wildcat profile attached to the rim; and
a second wildcat profile attached to the rim in spaced parallel relation with the first wildcat profile, such that a channel (35) is formed between the first and second wildcat profiles,
wherein the channel comprises a groove disposed within the channel,
wherein the groove is adapted to accommodate a chain segment of first size, and
wherein the pairs of wildcat profiles are adapted to accommodate a chain segment of a second size.

8. A chain wheel as in claim 7 wherein the groove is radiused, the radiused groove having a diameter less than that of the channel.

9. A chain wheel as in claim 8, wherein the channel is W-shaped.

10. A method of manipulating a chain having a plurality of chain segment sizes, said method comprising the steps of:
providing a chain wheel having a hub (3) and a pair of drums (1,2) disposed thereon in spaced parallel relation with one another, each drum having a plurality of wildcat profiles (4,5) of different profile sizes for engaging the plurality of chain segment sizes;
employing a first pair of wildcat profiles (4) of a first profile size to engage chain segments of a first size during forward or rearward manipulation of the chain; and
employing a second pair of wildcat profiles (5) of a second profile size to engage chain segments of a second size during rearward or forward manipulation of the chain.

11. The method of claim 10, wherein the steps of employing the pair of wildcat profiles to engage chain segments drives rearward or forward progress of the chain.

12. The method of claim 10, wherein the steps of employing the pair of wildcat profiles to engage chain segments guides rearward or forward progress of the chain.

13. The method of claim 10, wherein the steps of employing a pair of wildcat profiles to engage the chain segments brakes rearward or forward progress of the chain.

14. The method of claim 10, wherein each drum has an outer wildcat profile and an inner wildcat profile disposed generally adjacent the outer wildcat profile, said method further comprising the step of rotating each of a pair of one of the inner and outer wildcat profiles to accommodate the chain segment of the second size.

## Patentansprüche

1. Kettenrad, umfassend;
eine Radnabe (3, 30);
ein erstes äußeres Kettennussprofil (4), das um die Nabe herum angeordnet ist;
ein zweites äußeres Kettennussprofil (4), das in beabstandeter paralleler Beziehung zu dem ersten äußeren Kettennussprofil um die Nabe herum angeordnet ist;
ein erstes inneres Kettennussprofil (5), das um die Nabe herum angeordnet und generell benachbart zu und näher an der Radnabe als das erste äußere Kettennussprofil ist; und
ein zweites inneres Kettennussprofil (5), das in beabstandeter paralleler Beziehung zu dem ersten inneren Kettennussprofil und generell benachbart zu dem zweiten äußeren Kettennussprofil um die Nabe herum angeordnet ist,
wobei das erste innere Kettennussprofil und das zweite innere Kettennussprofil jedes zum Eingriff an einem Kettensegment ausgelegt sind.

2. Kettenrad nach Anspruch 1, wobei das Paar äußerer Kettennussprofile zum Eingriff mit einer ersten Kettensegmentgröße eingerichtet ist und das Paar innerer Kettennussprofile zum Eingriff mit einer zweiten Kettensegmentgröße eingerichtet ist.

3. Kettenrad nach Anspruch 1, wobei jedes der inneren und der äußeren Kettennussprofile eine Vielzahl von Zähnen (6, 33) aufweist, und wobei Paare voneinander beabstandeter Zähne dazu eingerichtet sind, Kettensegmente zwischen Paaren von Kettennussprofilen anzuordnen.

4. Kettenrad nach Anspruch 3, wobei die Zähne des ersten und des zweiten inneren Kettennussprofils zu jeweiligen Zähnen des ersten und des zweiten äußeren Kettennussprofils ausgerichtet sind.

5. Kettenrad nach Anspruch 1, wobei jedes der inneren Kettennussprofile bezüglich eines äußeren Kettennussprofils rotierbar um die Nabe verstellbar ist.

6. Kettenrad nach Ansprüchen 1 oder 5, weiter zwischen benachbarten Zähnen gebildete, gerundete Taschen (7, 34) zur Aufnahme horizontal angeordneter Glieder umfassend.

7. Kettenrad, umfassend:
einen Radkranz (32);
ein erstes Kettennussprofil, das an dem Radkranz befestigt ist; und
ein zweites Kettennussprofil, das in beabstandeter paralleler Beziehung zu dem ersten Kettennussprofil an dem Radkranz befestigt ist, sodass ein Kanal (35) zwischen dem ersten und dem zweiten Kettennussprofil gebildet wird,
wobei der Kanal eine in dem Kanal angeordnete Nut umfasst,
wobei die Nut dazu eingerichtet ist, ein Kettensegment einer ersten Größe aufzunehmen, und
wobei die Paare von Kettennussprofilen dazu eingerichtet sind, ein Kettensegment einer zweiten Größe aufzunehmen.

8. Kettenrad nach Anspruch 7, wobei die Nut gerundet ist, wobei die gerundete Nut einen Durchmesser aufweist, der kleiner als der des Kanals ist.

9. Kettenrad nach Anspruch 8, wobei der Kanal W-förmig ist.

10. Verfahren zur Handhabung einer Kette, die eine Vielzahl von Kettensegmentgrößen aufweist, wobei das Verfahren folgende Schritte umfasst:
Bereitstellen eines Kettenrads, das eine Nabe (3) und ein in beabstandeter paralleler Beziehung zueinander darauf angeordnetes Paar von Trommeln (1, 2) aufweist, wobei jede Trommel eine Vielzahl von Kettennussprofilen (4, 5) verschiedener Profilgrößen zum Eingriff mit der Vielzahl von Kettensegmentgrößen aufweist;
Anwenden eines ersten Paars von Kettennussprofilen (4) einer ersten Profilgröße zum Eingriff mit Kettensegmenten einer ersten Größe während einer vorwärts- oder rückwärtsgerichteten Handhabung der Kette; und
Anwenden eines zweiten Paars von Kettennussprofilen (5) einer zweiten Profilgröße zum Eingriff mit Kettensegmenten einer zweiten Größe während einer rückwärts- oder vorwärtsgerichteten Handhabung der Kette.

11. Verfahren nach Anspruch 10, wobei die Schritte des Anwendens des Paars von Kettennussprofilen zum Eingriff mit Kettensegmenten den rückwärts- oder vorwärtsgerichteten Fortgang der Kette antreibt.

12. Verfahren nach Anspruch 10, wobei die Schritte des Anwendens des Paars von Kettennussprofilen zum Eingriff mit Kettensegmenten den rückwärts- oder vorwärtsgerichteten Fortgang der Kette lenkt.

13. Verfahren nach Anspruch 10, wobei die Schritte des Anwendens des Paars von Kettennussprofilen zum Eingriff mit Kettensegmenten den rückwärts- oder vorwärtsgerichteten Fortgang der Kette bremst.

14. Verfahren nach Anspruch 10, wobei jede Trommel ein äußeres Kettennussprofil und ein generell benachbart zu dem äußeren Kettennussprofil angeordnetes inneres Kettennussprofil aufweist, wobei das Verfahren weiter den Schritt des Rotierens von jedem eines Paars von einem der inneren und äußeren Kettennussprofile zum Aufnehmen des Kettensegments der zweiten Größe umfasst.

## Revendications

1. Roue de chaîne comprenant :
un moyeu de roue (3, 30) ;
un premier profil de barbotin externe (4) positionné autour du moyeu ;
un second profil de barbotin externe (4) positionné autour du moyeu parallèlement et espacé par rapport au premier profil de barbotin externe ;
un premier profil de barbotin interne (5) positionné autour du moyeu et globalement adjacent et plus proche du moyeu de roue que le premier profil de barbotin externe ; et
un second profil de barbotin interne (5) positionné autour du moyeu parallèlement et espacé par rapport au premier profil de barbotin interne et globalement adjacent au second profil de barbotin externe,
dans lequel ledit premier profil de barbotin interne et ledit second profil de barbotin interne sont chacun configurés pour engager un segment de chaîne.

2. Roue de chaîne selon la revendication 1, dans laquelle la paire de profils de barbotin externes est adaptée à engager une première taille de segment de chaîne et la paire de profils de barbotin internes est adaptée à engager une seconde taille de segment de chaîne.

3. Roue de chaîne selon la revendication 1, dans laquelle chacun des profils de barbotin internes et externes comporte une pluralité de galets (6, 33), et dans lequel des paires de galets espacés sont adaptées à positionner des segments de chaîne entre des paires de profils de barbotin.

4. Roue de chaîne selon la revendication 3, dans laquelle les galets des premier et second profils de barbotin internes sont alignés avec les galets correspondants des premier et second profils de barbotin externes.

5. Roue de chaîne selon la revendication 1, dans laquelle chacun des profils de barbotin internes est réglable de manière rotative autour du moyeu par rapport à un profil de barbotin externe.

6. Roue de chaîne selon les revendications 1 ou 5, comprenant en outre des niches arrondies (7, 34) formées entre des galets adjacents pour recevoir des liaisons disposées horizontalement.

7. Roue de chaîne comprenant :
une jante (32) ;
un premier profil de barbotin attaché à la jante ; et
un second profil de barbotin attaché à la jante parallèlement et espacé par rapport au premier profil de barbotin, de sorte qu'un canal (35) est formé entre les premier et second profils de barbotin,
dans lequel le canal comprend une rainure disposée dans le canal,
dans lequel la rainure est adaptée à recevoir un segment de chaîne de première taille, et
dans lequel les paires de profils de barbotin sont adaptées à recevoir un segment de chaîne d'une seconde taille.

8. Roue de chaîne selon la revendication 7, dans laquelle la rainure est arrondie, la rainure arrondie ayant un diamètre inférieur à celui du canal.

9. Roue de chaîne selon la revendication 8, dans laquelle le canal est en forme de W.

10. Procédé de manipulation d'une chaîne ayant une pluralité de tailles de segment de chaîne, ledit procédé comprenant les étapes de/d' :
fourniture d'une roue de chaîne ayant un moyeu (3) et une paire de tambours (1,2) disposés sur celle-ci parallèlement et de manière espacée, chaque tambour ayant une pluralité de profils de barbotin (4,5) de différentes tailles de profil pour engager la pluralité de tailles de segment de chaîne ;
utilisation d'une première paire de profils de barbotin (4) d'une première taille de profil pour engager des segments de chaîne d'une première taille pendant une manipulation vers l'avant ou vers l'arrière de la chaîne ; et
utilisation d'une seconde paire de profils de barbotin (5) d'une seconde taille de profil pour engager des segments de chaîne d'une seconde taille pendant une manipulation vers l'arrière ou vers l'avant de la chaîne.

11. Procédé selon la revendication 10, dans lequel les étapes d'utilisation de la paire de profils de barbotin pour engager des segments de chaîne entraîne une progression vers l'arrière ou vers l'avant de la chaîne.

12. Procédé selon la revendication 10, dans lequel les étapes d'utilisation de la paire de profils de barbotin pour engager des segments de chaîne guide la progression vers l'arrière ou vers l'avant de la chaîne.

13. Procédé selon la revendication 10, dans lequel les étapes d'utilisation d'une paire de profils de barbotin pour engager les segments de chaîne freine vers l'arrière ou vers l'avant la progression de la chaîne.

14. Procédé selon la revendication 10, dans lequel chaque tambour a un profil de barbotin externe et un profil de barbotin interne disposé globalement de manière adjacente au profil de barbotin externe, ledit procédé comprenant en outre l'étape de tourner chacun des deux profils de barbotin interne et externe pour accueillir le segment de la chaîne de la seconde taille.
